(19) Europäisches Patentamt
European Patent Office
Office européen des brevets

(11) **EP 4 628 887 A1**

(12) **EUROPEAN PATENT APPLICATION**
published in accordance with Art. 153(4) EPC

(43) Date of publication:
**08.10.2025 Bulletin 2025/41**

(21) Application number: **23924207.6**

(22) Date of filing: **04.12.2023**

(51) International Patent Classification (IPC):
***G01N 27/9013*** (2021.01)   ***B21B 38/00*** (2006.01)

(52) Cooperative Patent Classification (CPC):
**B21B 38/00; G01N 27/9013**

(86) International application number:
**PCT/JP2023/043287**

(87) International publication number:
**WO 2024/176563 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.02.2023 JP 2023025322**

(71) Applicant: **JFE Steel Corporation Tokyo 100-0011 (JP)**

(72) Inventors:
• **TERADA, Kazuki**
  **Tokyo 100-0011 (JP)**
• **IMANAKA, Hiroki**
  **Tokyo 100-0011 (JP)**
• **NAKAMURA, Tomoki**
  **Tokyo 100-0011 (JP)**
• **MATSUI, Yutaka**
  **Tokyo 100-0011 (JP)**

(74) Representative: **Grünecker Patent- und Rechtsanwälte**
**PartG mbB**
**Leopoldstraße 4**
**80802 München (DE)**

(54) **MEASUREMENT JIG, MEASUREMENT DEVICE, MEASUREMENT METHOD, EQUIPMENT FOR MANUFACTURING PLATE-SHAPED PRODUCT, METHOD FOR CONTROLLING QUALITY OF PLATE-SHAPED PRODUCT, AND METHOD FOR MANUFACTURING PLATE-SHAPED PRODUCT**

(57)     Provided is a measurement jig of the present invention including: a contact member configured to come into contact with a side surface of a plate-shaped measurement target when a physical quantity measuring unit configured to measure a physical quantity of the measurement target measures a surface in a vicinity of an edge of the measurement target; and a holding member that holds the contact member such that a distance between the edge and the physical quantity measuring unit in a direction orthogonal to a scanning direction in which the physical quantity measuring unit performs scanning is kept constant.

FIG.1

## Description

### Field

The present invention relates to a measurement jig, a measurement apparatus, a measurement method, a manufacturing equipment of a plate-shaped product, a quality management method of a plate-shaped product, and a method of manufacturing a plate-shaped product.

### Background

Conventionally, a steel plate used for a line pipe, shipbuilding, a pressure vessel, a construction machine, and the like is manufactured through continuous casting or agglomeration, decomposition rolling and forging as necessary, and then hot rolling, heat treatment, cutting (shearing or gas cutting), and the like. The manufactured steel plate is shipped after performing an appearance and dimension inspection, an ultrasonic flaw detection test, a hardness inspection of a surface layer, an inspection of mechanical characteristics by extraction, and the like. Here, as one of defects of the steel plate which are problematic in a final product, there are a defect generated inside the steel plate and a defect called a hard spot in which a surface layer of the steel plate is partially hardened or a soft spot in which the surface layer is softened. As a method of measuring these defects, there is a method of performing measurement by using a cart to which a measuring instrument is attached. For example, Non Patent Literature 1 describes a method of performing measurement by attaching a sensor to a remotely operable cart, and Non Patent Literature 2 describes a method of performing measurement by attaching a sensor to a hand push type cart.

### Citation List

### Non Patent Literatures

Non Patent Literature 1: Bernd Wolter, Yasmine Gabi and Christian Conrad, "Nondestructive Testing with 3MA - An Overview of Principles and Application", Appl. Sci. 2019, 9, 1068
Non Patent Literature 2: Gerald Schneibel, Christoph Konig, Aschwin Gopalan, Jean-Marc Dussaulx, "Development of an Eddy Current based Inspection Technique for the Detection of Hard Spots on Heavy Plates", 19th World Conference on Non-Destructive Testing 2016

### Summary

### Technical Problem

In the defect measuring method of the related art, for example, a measuring instrument attached to a cart is brought into contact with a surface layer of a steel plate to measure a defect. Specifically, the measuring instrument is installed so that the measuring instrument itself is pressed against the steel plate or a distance between a surface of the measuring instrument and a surface of the steel plate is kept constant. In particular, in a case of measurement in which an interval (also referred to as lift-off) between the measuring instrument and the steel plate to be measured is very important, such as eddy current flaw detection and electromagnetic measurement, the measuring instrument is installed as described above. In addition, in a case of measurement by ultrasonic waves, a measuring instrument is installed similarly to the case of measurement by the eddy current flaw detection or the electromagnetic measurement. Further, when the entire surface of the steel plate is measured, a method is often used in which a marking line is drawn on the surface of the steel plate by using a choke or the like, and the cart is caused to travel along the line. In addition, since the cart operated by a person slightly meanders, it is necessary to drawn each marking line so that measurement ranges overlap each other at the time of moving along the marking line in order to measure the entire plate surface without missing.

Even in a case of measuring the vicinity of an edge, the measurement is performed along the marking line as described above. At this time, when the marking line is drawn so as to reduce a non-measurement range of the edge as much as possible, a sensor, wheels of the cart, and the like protrude from the plate, which may cause measurement abnormality. Since it is difficult to provide an overlap in the vicinity of the edge as in a central portion of the steel plate, a meandering portion of the cart becomes a non-measurement range as it is, and a large non-measurement range occurs around the edge.

In addition, as a problem in the measurement in the vicinity of the edge, there is an influence of an edge dead zone. The edge dead zone is a range that cannot be correctly performed due to the influence from the edge. In the case of electromagnetic measurement, there is a problem that measurement and evaluation cannot be correctly performed at an end portion due to a phenomenon called an edge effect in which an electromagnetic field concentrates at the end portion of the measurement target. As a method of reducing the dead zone, a method of changing a calibration curve and a measurement condition of inspection between the central portion of the steel plate and the vicinity of the edge, a method of providing a correction value, and the like can be considered. However, when the cart is moved on the surface of the steel plate to measure the vicinity of the edge, in a case where the cart meanders and the distance between the edge and the sensor cannot be kept constant in a direction orthogonal to a movement direction of the cart, measurement accuracy of a physical quantity of the surface in the vicinity of the edge of the steel plate deteriorates.

The present invention has been made in view of the above problems, and an object of the present invention is to provide a measurement jig, a measurement apparatus, a measurement method, a manufacturing equipment of a plate-shaped product, a quality management method of a plate-shaped product, and a method of manufacturing a plate-shaped product capable of improving measurement accuracy of a physical quantity of a surface in the vicinity of an edge of a measurement target.

Solution to Problem

To solve the problem and achieve the object, [1] a measurement jig according to the present invention includes: a contact member configured to come into contact with a side surface of a plate-shaped measurement target when a physical quantity measuring unit configured to measure a physical quantity of the measurement target measures a surface in a vicinity of an edge of the measurement target; and a holding member configured to hold the contact member such that a distance between the edge and the physical quantity measuring unit in a direction orthogonal to a scanning direction in which the physical quantity measuring unit performs scanning is kept constant.

[2] Moreover, in the measurement jig according to above [1], the contact member may be a disk-shaped rotating body having an outer peripheral surface that is in contact with the side surface, and may be rotatably provided in the holding member via a rotation shaft of the rotating body.

[3] Moreover, in the measurement jig according to above [1] or [2], the contact member may include a magnet.

[4] Moreover, a measurement apparatus according to the present invention includes: a physical quantity measuring unit configured to measure a physical quantity of a measurement target; and the measurement jig according to any one of above [1] to [3].

[5] Moreover, the measurement apparatus according to above [4] may further include: a correction unit configured to correct the physical quantity measured by the physical quantity measuring unit by using a correction formula indicating a relationship between a distance from the edge in the measurement target and the physical quantity, and a distance from the edge to the physical quantity measuring unit in measurement by the physical quantity measuring unit.

[6] Moreover, a measurement method according to the present invention includes: a physical quantity measurement step of measuring a physical quantity of a measurement target by using the measurement jig according to any one of above [1] to [3].

[7] Moreover, the measurement method according to above [6] may further include: a correction step of correcting the physical quantity measured in the physical quantity measurement step by using a correction formula indicating a relationship between a distance from the edge in the measurement target and the physical quantity, and a distance from the edge to the physical quantity measuring unit in the physical quantity measurement step.

[8] Moreover, a manufacturing equipment of a plate-shaped product according to the present invention includes: a manufacturing apparatus configured to manufacture a plate-shaped product; and the measurement apparatus according to above [4] or [5] which is configured to measure a physical quantity of the plate-shaped product manufactured by the manufacturing apparatus.

[9] Moreover, a quality management method of a plate-shaped product according to the present invention includes: a physical quantity measurement step of measuring a physical quantity of the plate-shaped product by the measurement method according to above [6] or [7]; and a quality management step of performing quality management of the plate-shaped product from a measurement result of the physical quantity obtained in the physical quantity measurement step.

[10] Moreover, a method of manufacturing a plate-shaped product according to the present invention includes: a manufacturing step of manufacturing a plate-shaped product; and a physical quantity measurement step of measuring a physical quantity of the plate-shaped product manufactured in the manufacturing step by the measurement method according to above [6] or [7].

Advantageous Effects of Invention

The measurement jig, the measurement apparatus, the measurement method, the manufacturing equipment of a plate-shaped product, the quality management method of a plate-shaped product, and the method of manufacturing a plate-shaped product according to the present invention can keep the distance between the edge of the measurement target and the physical quantity measuring unit constant in the measurement of the vicinity of the edge. As a result, the measurement jig, the measurement apparatus, the measurement method, the manufacturing equipment of a plate-shaped product, the quality management method of a plate-shaped product, and the method of manufacturing a plate-shaped product according to the present invention have an effect of reducing a non-measurement range and a dead zone and improving measurement accuracy.

Brief Description of Drawings

FIG. 1 is a side view illustrating a schematic configuration of a measurement apparatus according to a first embodiment.
FIG. 2 is a view of the measurement apparatus according to the first embodiment when viewed from a rear side in a scanning direction.

FIG. 3 is a block diagram illustrating a configuration of the measurement apparatus according to the first embodiment.

FIG. 4(a) is a plan view illustrating a configuration example of a physical quantity measuring unit. FIG. 4(b) is a side view illustrating the configuration example of the physical quantity measuring unit.

FIG. 5 is a side view of a sensor of the physical quantity measuring unit.

FIG. 6 is a plan view of the sensor of the physical quantity measuring unit.

FIG. 7 is a view illustrating a first example of a waveform of an AC signal (AC voltage) applied to an excitation coil.

FIG. 8 is a view illustrating a second example of the waveform of the AC signal (AC voltage) applied to the excitation coil.

FIG. 9(a) is a view illustrating a map of a physical quantity when the physical quantity of a surface in a region in the vicinity of an edge of a steel plate is measured without using an edge following unit. FIG. 9(b) is a view illustrating a map of a physical quantity when the physical quantity of the surface in the region in the vicinity of the edge of the steel plate is measured by using the edge following unit.

FIG. 10 is a flowchart illustrating an example of a procedure of creating edge influence data.

FIG. 11 is a view illustrating a relationship between a variation amount of a first electromagnetic feature amount and an edge distance based on edge influence data measured for five steel plates A to E.

FIG. 12 is a flowchart illustrating an example of control of edge influence correction of electromagnetic feature amounts by a control unit.

FIG. 13 is a view illustrating a relationship between the first electromagnetic feature amount and the edge distance before and after the edge influence correction. Description of Embodiments

(First Embodiment)

Hereinafter, a measurement jig and a measurement apparatus according to a first embodiment of the present invention will be described. Note that the present invention is not limited by the present embodiment.

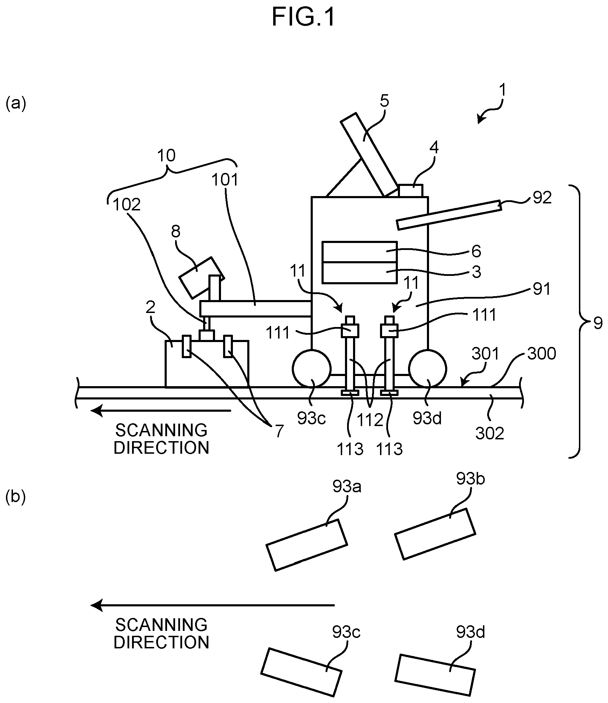

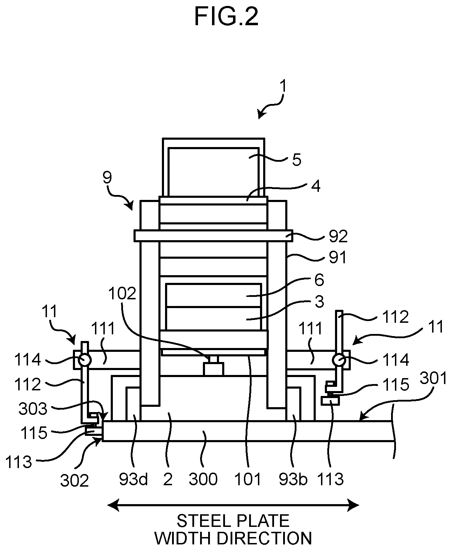

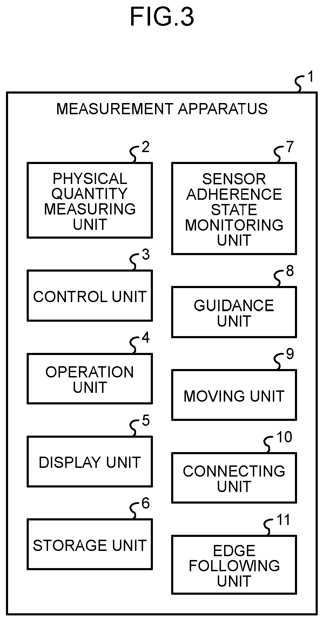

FIG. 1 is a side view illustrating a schematic configuration of a measurement apparatus 1 according to the first embodiment. FIG. 2 is a view of the measurement apparatus 1 according to the first embodiment when viewed from a rear side in a scanning direction. FIG. 3 is a block diagram illustrating a configuration of the measurement apparatus 1 according to the first embodiment.

The measurement apparatus 1 according to the first embodiment is movable by an operator and measures mechanical characteristics of a surface layer of a steel plate 300. In the case of the present embodiment, hardness of the surface layer of the steel plate 300 is calculated from an electromagnetic feature amount of the surface layer of the steel plate 300. Therefore, a measurement target is the steel plate 300, and a physical quantity to be measured is the electromagnetic feature amount of the surface layer. As the steel plate 300, a thick steel material serving as a material of a steel pipe used for a line pipe or the like can be exemplified. As illustrated in FIGS. 1 to 3, the measurement apparatus 1 according to the first embodiment includes a physical quantity measuring unit 2, a control unit 3, an operation unit 4, a display unit 5, a storage unit 6, a sensor adherence state monitoring unit 7, a guidance unit 8, a moving unit 9, a connecting unit 10, and an edge following unit 11.

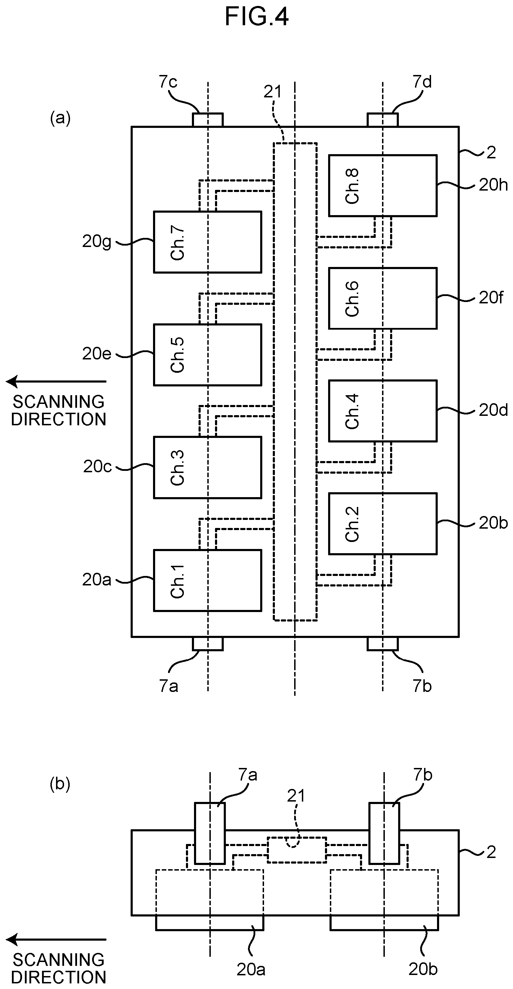

The physical quantity measuring unit 2 includes an ultrasonic sensor and a sensor for eddy current flaw detection or electromagnetic measurement. FIG. 4 is a plan view and a side view illustrating a configuration example of the physical quantity measuring unit 2. In the present embodiment, as illustrated in FIGS. 4(a) and 4(b), the physical quantity measuring unit 2 includes a plurality of (in this example, eight Ch.1 to Ch.8) sensors 20a to 20h. Note that, in the following description, the sensors 20a to 20h are also simply referred to as a sensor 20 unless otherwise distinguished. Although only one sensor 20 may be provided in the physical quantity measuring unit 2, it is preferable to provide a plurality of the sensors 20 because a range of the steel plate 300, which can be scanned at a time, can be widened and measurement efficiency can be enhanced. In addition, each sensor 20 has a structure capable of pressing the physical quantity measuring unit 2 downward via the connecting unit 10 or the like to a surface 301 of the steel plate 300.

Returning to FIG. 3. The control unit 3 includes an arithmetic processing device such as a microcomputer, measures the surface 301 of the steel plate 300 by using physical quantity measuring unit 2, and outputs a measurement result to the display unit 5. Some or all of the control unit 3, the operation unit 4, and the display unit 5 may be integrated by using an information processing apparatus such as a tablet or a PC.

The operation unit 4 includes an input device such as a keyboard, a mouse pointer, and a touchpad. The operation unit 4 is operated when an operation amount or content necessary for operating the physical quantity measuring unit 2 or the control unit 3 is input, and outputs an operation input signal to the control unit 3. The operation unit 4 may be a device capable of setting a necessary operation amount such as a toggle switch (dial switch).

The display unit 5 is constituted by a display device such as a liquid crystal display, and displays information regarding a measurement result of the steel plate 300 which is output from the control unit 3 and operation information of the physical quantity measuring unit 2 and the control unit 3. In the present embodiment, the display unit 5 displays the measurement result on a map of the steel plate 300. Specifically, the display unit 5 displays a position where a mechanical characteristic on the steel plate 300 is a value set in advance on the map of the steel plate 300. The display unit 5 may display a scanning speed and a movement amount of a cart at the time of measurement. In addition, the display unit 5 may display a monitoring result of an adherence state of the sensor 20 which is output from the sensor adherence state monitoring unit 7. In addition, the display unit 5 may give a notification of the measurement result by voice.

In order for the physical quantity measuring unit 2 to correctly measure the physical quantity of the steel plate 300, it is preferable that the sensor 20 of the physical quantity measuring unit 2 is pressed against the steel plate 300 so as to be in contact with the surface 301 of the steel plate 300. Alternatively, in order for the physical quantity measuring unit 2 to correctly measure the physical quantity of the steel plate 300, an interval between the surface 301 of the steel plate 300 and the sensor 20 of the physical quantity measuring unit 2 is preferably kept constant. However, the physical quantity measuring unit 2 does not correctly follow the surface 301 of the steel plate 300 due to the undulation of the surface 301 of the steel plate 300. Therefore, pressing of the physical quantity measuring unit 2 is weakened, and the physical quantity measuring unit 2 is separated from the steel plate 300, or the interval between the surface 301 of the steel plate 300 and the physical quantity measuring unit 2 cannot be kept constant. For these reasons, there may be a portion where measurement is not performed correctly. In this case, it is preferable to include a sensor adherence state monitoring unit 7 to be described next.

The sensor adherence state monitoring unit 7 is a device that monitors whether or not the sensor 20 of the physical quantity measuring unit 2 correctly adheres to the surface 301 of the steel plate 300 and/or whether or not the interval between the surface 301 of the steel plate 300 and the sensor surface is kept constant. In the present embodiment, as illustrated in FIGS. 4(a) and 4(b), the sensor adherence state monitoring unit 7 measures the distance between the sensor 20 and the steel plate 300 by using laser distance meters 7a to 7d attached on a straight line passing through a central position in a longitudinal direction of the sensor 20 constituting the physical quantity measuring unit 2. As a result, the sensor adherence state monitoring unit 7 monitors the adherence state of the sensor 20. Note that the sensor adherence state monitoring unit 7 may monitor the adherence state of the sensor 20 by using an eddy current type distance meter or a contact type touch sensor without limitation to the laser distance meters.

Returning to FIG. 3. The guidance unit 8 is a device that guides the physical quantity measuring unit 2 at the time of scanning with respect to a marking line drawn on the surface 301 of the steel plate 300. Specifically, with respect to one marking line, the guidance unit 8 projects three line laser beams parallel to the marking line to guide the physical quantity measuring unit 2. In the present embodiment, an interval between the three line laser beams is set to a width of PL. Note that the guidance unit 8 is not limited to a unit that projects the three line laser beams onto the marking line. For example, the guidance unit 8 may arrange three guide members with respect to the marking line, or may capture an image of the marking line by an imaging unit and display an image, in which images of three guide lines are superimposed on the captured image of the marking line, on the display unit 5.

The moving unit 9 includes, for example, a hand cart (trolley). More specifically, a cart 91 and a handle 92 for an operator to control the movement (for example, a movement amount, a movement speed, a movement direction, and the like) of the cart 91 are provided. The cart 91 is movable with the physical quantity measuring unit 2, the control unit 3, the operation unit 4, the display unit 5, the storage unit 6, the sensor adherence state monitoring unit 7, the guidance unit 8, the connecting unit 10, and the edge following unit 11 placed thereon. The moving unit 9 causes the physical quantity measuring unit 2 to scan the surface 301 of the steel plate 300. Four wheels 93a to 93d are attached to the cart 91. The operator performs measurement on the steel plate 300 by causing the physical quantity measuring unit 2 to scan the surface 301 of the steel plate 300 by using the moving unit 9. At this time, since the cart 91 includes the wheels 93a to 93d, the operator can cause the physical quantity measuring unit 2 to scan while controlling a movement amount of the physical quantity measuring unit 2, a movement speed of the physical quantity measuring unit 2, and a movement direction of the physical quantity measuring unit 2 by pushing the handle 92. As illustrated in FIGS. 1(a) and 1(b), in a case where four wheels 93a to 93d are provided as the moving unit 9, it is preferable that the wheels are arranged on an inner side with respect to the scanning direction in order to enhance straightness at the time of scanning. Note that the moving unit 9 is not limited to the configuration in which the operator pushes and moves the moving unit 9 by hand, and may be configured to automatically move, for example.

The connecting unit 10 is a unit that connects the physical quantity measuring unit 2 and the control unit 3 placed in the cart 91. The connecting unit 10 includes an arm 101 and a cylinder 102. The arm 101 arranges the physical quantity measuring unit 2 in front of the scanning direction of the cart 91. The cylinder 102 holds the physical quantity measuring unit 2 so that the sensor 20 of the physical quantity measuring unit 2 can correctly adhere to the surface 301 of the steel plate 300 and/or the distance between the surface 301 of the steel plate 300 and the sensor surface can be kept constant. The connecting unit 10 holds the physical quantity measuring unit 2 at a position that does not interfere with the movement of the cart 91. At the same time, the connecting unit 10 can hold the physical quantity measuring unit 2 so that the sensor 20 of the physical quantity measuring unit 2 can correctly adhere to the surface 301 of the steel plate 300 and/or the distance between the surface 301 of the steel plate 300 and the sensor surface can be kept constant. Furthermore, the connecting unit 10 may have a function of being electrically connecting to the control unit 3 such that an output of the sensor 20 of the physical quantity measuring unit 2 is transmitted to the control unit 3. In addition, the connecting unit 10 may have a function of electrically connecting the guidance unit 8 and the control unit 3 so that the control unit 3 and the operation unit 4 can adjust and control the position of the line laser beams of the guidance unit 8.

The connecting unit 10 may include a driving unit (not illustrated) so that the sensor 20 of the physical quantity measuring unit 2 correctly adheres to the surface 301 of the steel plate 300 and/or the interval between the surface 301 of the steel plate 300 and the sensor surface is kept constant. The control unit 3 and an end portion of the arm 101 to which the physical quantity measuring unit 2 is not connected are connected to the driving unit. With this driving unit, the arm 101 moves up and down and/or the cylinder 102 extends or contracts in a vertical direction, whereby the sensor 20 of the physical quantity measuring unit 2 can be placed at a correct position. The control of the driving unit is preferably performed by the control unit 3. The control unit 3 sets a driving amount based on an input from the operation unit 4 and/or an output of the sensor adherence state monitoring unit 7, and operates the driving unit based on the driving amount.

The edge following unit 11 is a measurement jig for restraining the moving unit 9 with respect to the steel plate 300 to keep the distance between the sensor 20 of the physical quantity measuring unit 2 and an edge 303 of the steel plate 300 constant. The edge following unit 11 includes an arm 111, a lifting and lowering member 112, a contact member 113, a lifting and lowering fixing unit 114, and a rotary shaft member 115. The arm 111 is a support member elongated in a width direction orthogonal to the scanning direction (movement direction) of the moving unit 9. One end portion of the arm 111 is fixed to a side surface of the cart 91 in the width direction. An L-shaped lifting and lowering member 112 elongated in the vertical direction is provided at the other end portion of the arm 111 so as to be movable in the vertical direction with respect to the arm 111. The lifting and lowering fixing unit 114 is configured to be able to fix the lifting and lowering member 112 to the arm 111 at any position in the vertical direction. The rotary shaft member 115 is provided at a lower end portion of the lifting and lowering member 112 so as to have an axis in the vertical direction, and the contact member 113 is rotatably provided in the rotary shaft member 115. The contact member 113 is a disk-shaped rotating body having an outer peripheral surface in contact with a side surface 302 of the steel plate 300. As a result, the contact member 113 moves along the side surface 302 of the steel plate 300 while rotating, so that the moving unit 9 can be smoothly moved on the surface 301 of the steel plate 300. In addition, when the steel plate 300 is a magnetic body, it is preferable to provide a magnet in the contact member 113, for example. As a result, it is possible to suppress separation of the contact member 113 from the side surface 302 of the steel plate 300 by the adsorption force by the magnetic force of the magnet provided in the contact member 113. Here, the magnet provided in the contact member 113 may be a permanent magnet or an electromagnet. At this time, it is preferable to select a magnetic force that does not significantly affect the eddy current flaw detection. Basically, since the magnetic field concentrates in the vicinity of the edge and a range apparently affected is narrowed, it can be expected that the influence on the eddy current flaw detection is slight. In addition, since the size can be reduced, the permanent magnet is more preferable. Note that, in the present embodiment, the arm 111 and the lifting and lowering member 112 constitute a holding member that holds the contact member 113 so as to keep a constant distance between the edge 303 of the steel plate 300 and the sensor 20 in a direction orthogonal to the scanning direction in which the sensor 20 (physical quantity measuring unit 2) is caused to scan.

When a physical quantity in the vicinity of the edge 303 of the steel plate 300 is measured by the measurement apparatus 1 according to the first embodiment, the height is adjusted such that an outer peripheral surface of the contact member 113 comes into contact with the side surface 302 of the steel plate 300 by moving the lifting and lowering member 112 in the vertical direction with respect to the arm 111. Note that the vicinity of the edge is, for example, a range from an end portion (edge) to 120 [mm] in a steel plate width direction, and a range in which a physical quantity actually measured by the physical quantity measuring unit 2 further varies as compared with the central portion in the steel plate width direction can be defined as the vicinity of the edge. In the measurement apparatus 1 according to the first embodiment, the moving unit 9 is moved in the scanning direction while the outer peripheral surface of the contact member 113 is brought into contact with the side surface 302 of the steel plate 300 to follow the edge 303. As a result, the moving unit 9 can be moved while the distance between the moving unit 9 and the edge 303 of the steel plate 300, and furthermore, the distance between the sensor 20 of the physical quantity measuring unit 2 and the edge 303 of the steel plate 300 is kept constant. Therefore, in the measurement apparatus 1 according to the first embodiment, the physical quantity of the surface 301 in a region in the vicinity of the edge of the steel plate 300 can be measured by the physical quantity measuring unit 2 while the distance between the sensor 20 and the edge 303 is kept constant along the edge 303 (side surface 302) of the steel plate 300.

In addition, when the surface 301 of the steel plate 300 and the contact member 113 interfere with each other at the time of measuring the physical quantity other than the vicinity of the edge 303 of the steel plate 300 by the physical quantity measuring unit 2, the contact member 113 is retracted above the steel plate 300 by moving the lifting and lowering member 112 upward.

In addition, in correspondence with the steel plate 300 that is the measurement target, a range to be measured on the surface 301 of the steel plate 300, that is, a distance between the edge 303 and the sensor 20 (physical quantity measuring unit 2) may be changed in the steel plate width direction. Therefore, the edge following unit 11 may be configured such that the lifting and lowering member 112 is movable in the arm longitudinal direction (steel plate width direction) with respect to the arm 111, for example, by a slide mechanism. Note that at this time, for example, the lifting and lowering fixing unit 114 may be configured such that the lifting and lowering member 112 can be fixed to the arm 111 at any position in the arm longitudinal direction. Then, the lifting and lowering member 112 is slid in the arm longitudinal direction with respect to the arm 111 to change the distance between the cart 91 and the contact member 113 in the arm longitudinal direction, whereby the distance between the edge 303 and the sensor 20 (physical quantity measuring unit 2) can be adjusted in the steel plate width direction.

When the entire surface of the steel plate 300 is measured by the measurement apparatus 1 according to the first embodiment, it is generally necessary to cause the moving unit 9 to travel by reversing the scanning direction (movement direction) when the moving unit 9 reaches an end portion in the scanning direction (movement direction) on the surface 301 of the steel plate 300. Therefore, it is desirable to provide the edge following unit 11 on the left and right with respect to the scanning direction (traveling direction) of the moving unit 9. In addition, in the configuration in which only one contact member 113 of the edge following unit 11 is brought into contact with the side surface 302 of the steel plate 300, the moving unit 9 may rotate on the surface 301 of the steel plate 300 around a contact portion between the side surface 302 of the steel plate 300 and the contact member 113 of the edge following unit 11 as a center of rotation, and the direction of the moving unit 9 may be changed. Therefore, it is desirable to provide at least two edge following units 11 in the front and rear in the scanning direction (traveling direction) of the moving unit 9.

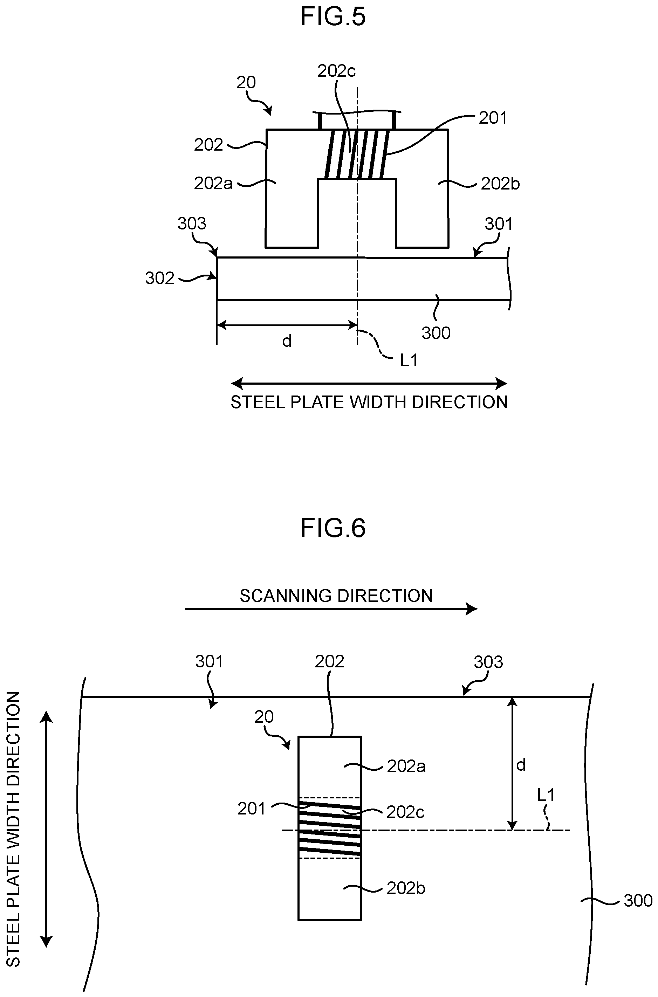

FIG. 5 is a side view of the sensor 20 of the physical quantity measuring unit 2. FIG. 6 is a plan view of the sensor 20 of the physical quantity measuring unit 2. The sensor 20 of the physical quantity measuring unit 2 includes an excitation coil 201 and a magnetizing yoke 202. In the example illustrated in FIG. 5, the magnetizing yoke 202 includes two leg portions 202a and 202b, and the excitation coil 201 is wound around a yoke portion 202c between the leg portion 202a and the leg portion 202b. The excitation coil 201 of the sensor 20 is connected to an excitation portion 21 provided in the physical quantity measuring unit 2. Then, when the excitation coil 201 is excited by applying an AC voltage (AC signal) to the excitation coil 201 by the excitation portion 21, a magnetic field is generated in the steel plate 300 via the magnetizing yoke 202, and an electromagnetic feature amount of the steel plate 300 can be obtained as a variation in an output signal of the excitation coil 201. Note that the electromagnetic feature amount is, for example, a physical quantity directly or indirectly related to a magnetization amount, a differential permeability, an eddy current signal (eddy current impedance), a harmonic component, a coercive force, and the like. In the present embodiment, an example in which one type of excitation coil 201 is used will be described, but a detection coil may be provided separately from the excitation coil 201. In addition, the detection coil is not limited to being wound around the magnetizing yoke 202 similarly to the excitation coil 201, and for example, may be wound around a magnetizing yoke different from the magnetizing yoke 202 around which the excitation coil 201 is wound, or may be used without being wound around the magnetizing yoke.

Here, in the present embodiment, as illustrated in FIGS. 5 and 6, in a state where the leg portion 202a and the leg portion 202b are arranged side by side in the steel plate width direction, a distance between a center line L1 of the sensor 20 and the edge 303 of the steel plate 300 in the steel plate width direction is defined as an edge distance d.

In the measurement apparatus 1 according to the first embodiment, a plurality of the excitation coils 201 constituting the plurality of sensors 20a to 20h of the physical quantity measuring unit 2 are simultaneously excited by the excitation portion 21, so that local electromagnetic feature amounts at a plurality of places of the steel plate 300 can be simultaneously measured.

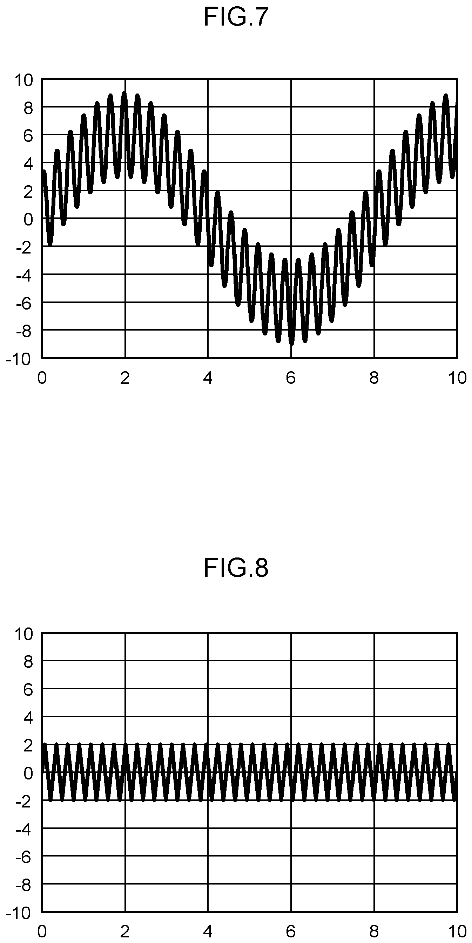

The excitation portion 21 applies an AC signal (AC voltage) to the excitation coil 201 of the sensor 20 close to the steel plate 300 to acquire a signal including the electromagnetic feature amount of the steel plate 300. In the present embodiment, it is preferable to measure the electromagnetic feature amount by an eddy current flaw detection method or a 3 MA (Micromagnetic Multiparameter Microstructure and Stress Analysis) technology using the excitation portion 21 and the sensor 20. For example, the excitation portion 21 applies an AC signal (AC voltage) in which two frequencies are superimposed as illustrated in FIG. 7 and an AC signal (AC voltage) of one frequency as illustrated in FIG. 8 to the excitation coil 201 in two divided times, thereby measuring the electromagnetic feature amount. A signal obtained by applying an AC signal (AC voltage) by using one frequency as illustrated in FIG. 5 is generally called an eddy current signal, and is particularly suitable for flaw detection of a surface layer portion of the steel plate 300. In the eddy current flaw detection method, an amplitude and a phase of an eddy current signal are used to detect a surface defect of the steel plate 300 by utilizing a phenomenon in which an eddy current on the surface 301 of the steel plate 300 excited by applying an AC signal (AC voltage) to the excitation coil 201 varies depending on the presence or absence of the surface defect.

Note that the electromagnetic feature amount may be measured by applying only one AC signal (AC voltage) of the two types of AC signals (AC voltages) illustrated in FIGS. 7 and 8 to the excitation coil 201, but the present invention is not limited thereto. That is, by using both of the two types of AC signals (AC voltages) illustrated in FIGS. 7 and 8, it is possible to measure a plurality of electromagnetic feature amounts having different characteristics. Therefore, it is preferable to use both of the two types of AC signals (AC voltages) illustrated in FIGS. 7 and 8 and apply the two types of AC signals (AC voltages) to the excitation coil 201 in two divided times in order to correct the edge influence and estimate mechanical characteristics.

In addition, the range in which the electromagnetic feature amount is measured on the surface 301 of the steel plate 300 changes in correspondence with the size of the sensor 20 (the excitation coil 201 and the magnetizing yoke 202) and the frequency of the AC signal (AC voltage) applied to the excitation coil 201. When an AC signal (AC voltage) is applied, a magnetic field concentrates on the surface layer of the steel plate 300 due to a skin effect, and as a result, the electromagnetic feature amount of the surface layer is measured. A range in which the electromagnetic feature amount is measured is averaged in a range in which the magnetic field is distributed. Therefore, in the case of locally measuring the electromagnetic feature amount, it is preferable to reduce the size of the sensor 20 (the excitation coil 201 and the magnetizing yoke 202) and select the frequency of the AC signal (AC voltage) to be applied to the excitation coil 201 so that a skin depth corresponds to a depth range to be measured.

In addition, in the measurement apparatus 1 according to the first embodiment, the physical quantity measuring unit 2 measures the physical quantity (electromagnetic feature amount) of the entire surface of the steel plate 300 while moving the physical quantity measuring unit 2 by causing the moving unit 9 to travel in the scanning direction on the surface 301 of the steel plate 300 without moving the steel plate 300. Note that the physical quantity measuring unit 2 may measure a physical quantity (electromagnetic feature amount) of the entire surface of the steel plate 300 by moving the steel plate 300 without moving the physical quantity measuring unit 2.

In addition, the measurement apparatus 1 according to the first embodiment may include, for example, a rotary encoder as a movement distance acquisition unit that acquires a movement distance of the physical quantity measuring unit 2 on the surface 301 of the steel plate 300. In addition, the measurement apparatus 1 according to the first embodiment may include, for example, an eddy current type or laser type edge position detection sensor as an edge position detection unit that detects an edge position of the steel plate 300. The edge distance d at the time of measuring the physical quantity (electromagnetic feature amount) of the surface 301 in the vicinity of the edge of the steel plate 300 may be derived by using the rotary encoder and the edge position detection sensor in combination.

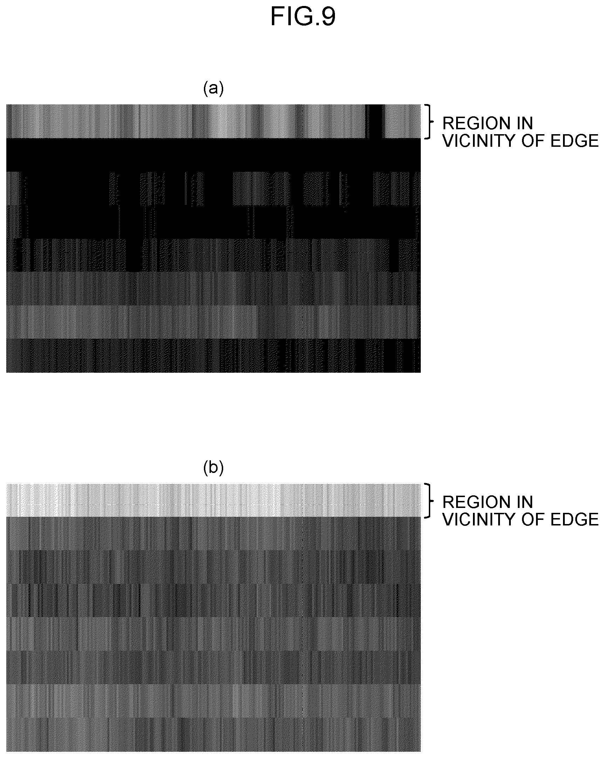

FIG. 9(a) is a view illustrating a map of the physical quantity when the physical quantity of the surface 301 in a region in the vicinity of the edge of the steel plate 300 is measured without using the edge following unit 11. Note that here, marking is performed on the surface 301 of the steel plate 300 so that the edge distance d is 10 [mm], and the electromagnetic feature amount is measured along the marking line. As illustrated in FIG. 9(a), it can be confirmed that a fluctuation in light and shade is large and a fluctuation in a measured value of the electromagnetic feature amount is large in a region in the vicinity of the edge of the steel plate 300. This is because when the measurement apparatus 1 measures the physical quantity of the surface 301 in the region in the vicinity of the edge of the steel plate 300, the cart 91 may fall from the steel plate 300. For this reason, it is considered that straightness of the cart 91 is deteriorated as compared with the central portion in the steel plate width direction, and the edge distance d is not kept constant and greatly fluctuates.

FIG. 9(b) is a view illustrating a map of the physical quantity when the physical quantity of the surface 301 in the region in the vicinity of the edge of the steel plate 300 is measured by using the edge following unit 11. Note that, here, the electromagnetic feature amount is measured by adjusting the edge following unit 11 so that the edge distance d is 10 [mm]. As illustrated in FIG. 9(b), it can be confirmed that a variation in light and shade is smaller in the region in the vicinity of the edge of the steel plate 300 and a fluctuation in the measured value of the electromagnetic feature amount is smaller in the region in the vicinity of the edge as compared with FIG. 9(a). This is considered to be because the edge distance d is kept constant by the edge following unit 11.

As described above, in the measurement apparatus 1 according to the first embodiment, it is possible to improve the measurement accuracy of the physical quantity (electromagnetic feature amount) of the surface 301 in the region in the vicinity of the edge of the steel plate 300 by keeping the edge distance d constant by using the edge following unit 11.

(Second Embodiment)

Hereinafter, a measurement apparatus and a measurement method according to a second embodiment of the present invention will be described. Note that, since the configuration of the measurement apparatus according to the second embodiment is similar to that of the measurement apparatus 1 according to the first embodiment, description thereof will be appropriately omitted.

When the measurement apparatus 1 according to the second embodiment is used to perform the electromagnetic measurement such as eddy current measurement on the surface of the steel plate 300 by the physical quantity measuring unit 2, there is a problem that a measurement result cannot be correctly evaluated due to a phenomenon called an edge effect in which an electromagnetic field concentrates on an end portion of the steel plate 300. In order to solve this problem, the inventors of the present application have conducted intensive studies and examined a relationship between a plurality of electromagnetic feature amounts and the edge distance d. As a result, the inventors of the present application have found that, although the manner of variation is different depending on each electromagnetic feature amount, there is a common variation tendency in the vicinity of the edge in a plurality of steel plates different in materials and mechanical characteristics, and the edge influence can be corrected. In addition, the inventors of the present application have found that it is possible to estimate the edge distance d or estimate the fluctuation amount of another electromagnetic feature amount due to the edge effect by using the electromagnetic feature amount having a larger variation due to the edge effect as compared with the variation due to a material or mechanical characteristics. As a result, the inventors of the present application have found that the edge influence can be corrected even in a case where the edge distance d cannot be directly measured due to a complicated shape of the end portion of the steel plate, for example.

In the measurement apparatus 1 according to the second embodiment, the control unit 3 performs predetermined processing on a reception signal acquired by the excitation portion 21 provided in the sensor 20 of the physical quantity measuring unit 2 to acquire a plurality of electromagnetic feature amounts that vary depending on the material of the steel plate 300. The storage unit 6 stores edge influence data and material data, and these pieces of data are read when the control unit 3 corrects the edge influence and predicts the material. In addition, an edge influence correction formula and a material prediction formula calculated in advance by the control unit 3 may be stored in the storage unit 6 based on the edge influence data and the material data. The control unit 3 corrects the electromagnetic feature amount fluctuated by the edge influence by using the edge influence data stored in the storage unit 6. The edge influence data is obtained by measuring electromagnetic feature amounts while changing the edge distance d for a plurality of steel plates 300 different in materials in advance, and is measurement data representing a relationship between the edge distance d and each electromagnetic feature amount. In the present embodiment, the control unit 3 has a function as a correction unit that corrects the electromagnetic feature amount (physical quantity) measured by the physical quantity measuring unit 2 by using the edge influence correction formula indicating the relationship between the edge distance d and the electromagnetic feature amount (physical quantity) in the steel plate 300 and the edge distance d measured by the physical quantity measuring unit 2. In addition, the edge influence correction formula is a formula for correcting the edge influence calculated based on the edge influence data, and is a formula for adding an offset to each electromagnetic feature amount in correspondence with the edge distance d (distance of measurement position).

The control unit 3 outputs the acquired electromagnetic feature amount or the electromagnetic feature amount in which the edge influence is corrected to the display unit 5. Furthermore, a prediction value of the mechanical characteristics of the steel plate 300 that is a measurement target may be calculated based on the electromagnetic feature amount, and the prediction value may be output to the display unit 5. The prediction value of the mechanical characteristics is calculated based on material data stored in advance in the storage unit 6 by measuring the electromagnetic feature amount for each material. The display unit 5 displays the electromagnetic feature amount or the prediction value of the mechanical characteristics output from the control unit 3 in an appropriate format.

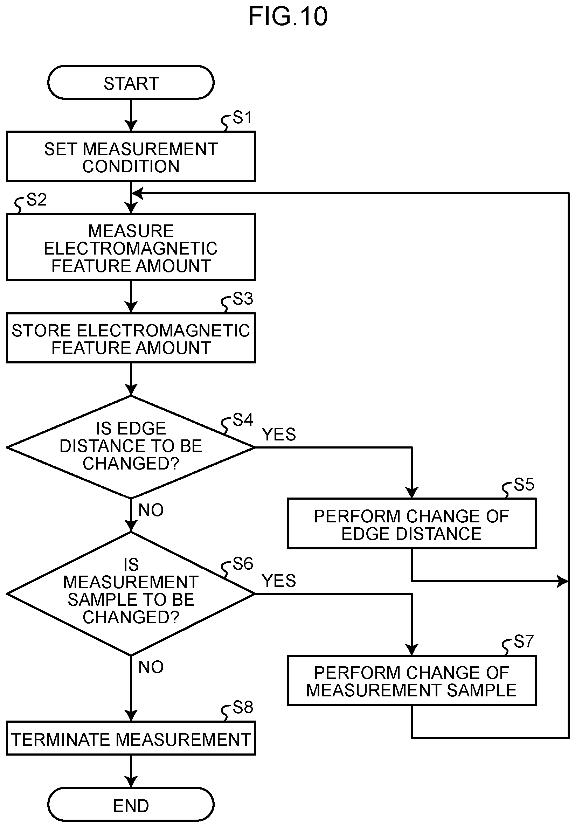

FIG. 10 is a flowchart illustrating an example of a procedure of creating the edge influence data. First, in measuring the edge influence data, measurement conditions such as a frequency and a voltage of an AC signal applied to the excitation portion 21 are set (Step S1). Note that the measurement conditions excluding the edge distance d and the configuration of the physical quantity measuring unit 2 are preferably exactly the same as those when the steel plate 300 that is a measurement target is actually measured. Next, a physical quantity measurement step of measuring the electromagnetic feature amount of the surface 301 in a region in the vicinity of the edge of the steel plate 300 that is a measurement target by the physical quantity measuring unit 2 by using the set measurement condition is executed (Step S2). Next, the measured electromagnetic feature amount is stored in the storage unit 6 (Step S3). Next, it is determined whether or not to change the edge distance d until the electromagnetic feature amount is stored in the storage unit 6 with the necessary number of edge distance conditions (Step S4). When it is determined that the edge distance d is to be changed (Yes in Step S4), the edge distance d is changed (Step S5). Then, the processing of Steps S2 to S5 is repeatedly executed until the electromagnetic feature amount is stored in the storage unit 6 with the necessary number of edge distance conditions, and the measurement and storage of the electromagnetic feature amount at different edge distances d are repeated. Note that it is preferable that the necessary number of edge distance conditions is increased as much as possible, and an interval of the edge distance d is finely set. In addition, although the measurement varies depending on the frequency of the excitation signal, it is preferable to perform the measurement from the vicinity of the edge to a range in which the edge influence disappears sufficiently. According to this, it is possible to accurately correct the edge influence. In addition, by using a scanner, an encoder, or the like, measurement can be performed while finely changing the edge distance d.

When the measurement of the electromagnetic feature amount is completed with the necessary number of edge distance conditions and it is determined that the edge distance d is not changed (No in Step S4), it is determined whether or not to change the measurement sample (Step S6). When it is determined that the measurement sample is to be changed (Yes in Step S6), the measurement sample is changed (Step S7). Then, the processing of Steps S2 to S5 is repeatedly executed until the electromagnetic feature amount is stored in the storage unit 6 with the necessary number of edge distance conditions, and the measurement and storage of the electromagnetic feature amount at different edge distances d are repeated.

It is preferable to use a measurement sample having manufacturing conditions and mechanical characteristics close to those of the steel plate 300 to be actually measured. In consideration of variations in the manufactured steel plates, for example, it is preferable to perform measurement on a plurality of measurement samples under the same manufacturing conditions to create edge influence data. In addition, it is preferable to measure and store the electromagnetic feature amount by using a plurality of samples having completely different steel types and manufacturing conditions. According to this, it is possible to select edge influence data close to the conditions of the steel plate 300 that is a measurement target when actually correcting the electromagnetic feature amount by using a database created by acquiring the edge influence data under conditions as wide as possible with regard to the steel type and the manufacturing conditions. Then, when it is determined that the measurement sample is not changed (No in Step S6), the measurement of the electromagnetic feature amount is ended (Step S8), and the series of control is ended.

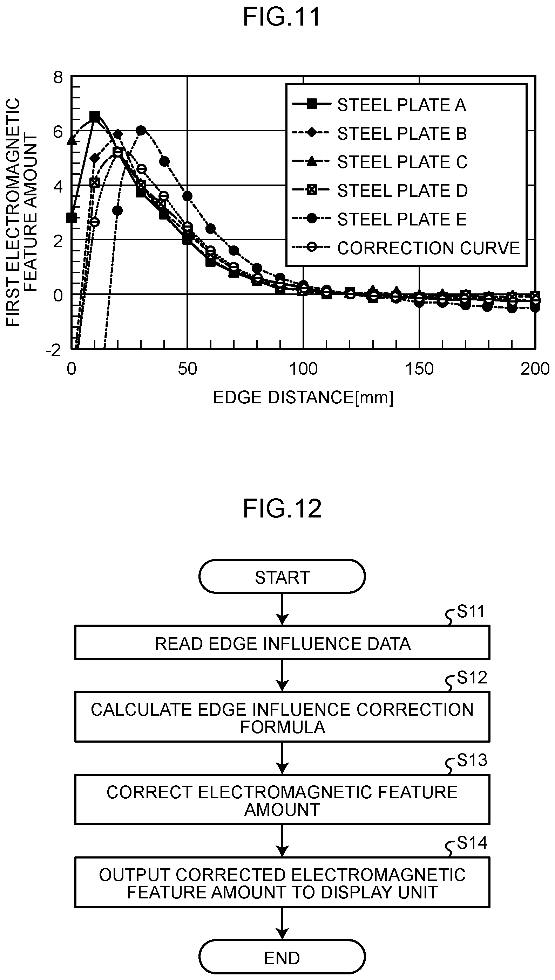

FIG. 11 is a view illustrating a relationship between a variation amount of a first electromagnetic feature amount and the edge distance d based on the edge influence data measured for five steel plates A to E.

The variation amount of the first electromagnetic feature amount is calculated by dividing each measured value by an average value of values measured in a range not affected by the edge. As a result, an output difference of the sensor 20 due to the material is removed, and only a variation amount due to the edge influence can be derived. In general, in any of the steel plates, variations in the first electromagnetic feature amount in the vicinity of the edge have the same tendency, and a curve representing an average variation in the vicinity of the edge can be acquired as a correction curve by averaging respective approximate curves.

Although FIG. 11 illustrates the relationship between the first electromagnetic feature amount, which is one of the plurality of electromagnetic feature amounts, and the edge distance d, the actual edge influence data also includes a plurality of other electromagnetic feature amounts different from the first electromagnetic feature amount. Since the correction curve may be different depending on the electromagnetic feature amount, it is preferable to individually acquire each electromagnetic feature amount. In addition, in a configuration in which a plurality of sensors 20 of the physical quantity measuring unit 2 are arranged close to each other, there is a possibility that the sensors 20 affect each other, and thus, it is preferable to derive a correction curve for each sensor 20.

Next, a method of correcting the edge influence of the electromagnetic feature amount by the control unit 3 will be described. FIG. 12 is a flowchart illustrating an example of control of the edge influence correction of the electromagnetic feature amounts by the control unit 3. First, the control unit 3 reads the edge influence data stored in the storage unit 6 (Step S11). Next, an edge influence correction formula is calculated for each electromagnetic feature amount from the relationship between the edge distance d and the electromagnetic feature by using the read edge influence data (Step S12). Next, the control unit 3 acquires the electromagnetic feature amount measured by the sensor 20 of the physical quantity measuring unit 2, and executes a correction step of correcting the electromagnetic feature amount by using the calculated edge influence correction formula and the edge distance d acquired in advance (Step S13). Finally, the control unit 3 outputs the corrected electromagnetic feature amount to the display unit 5 (Step S14).

Note that the calculation of the edge influence correction formula is preferably completed in advance before the acquisition of the electromagnetic feature amount, but may be performed simultaneously with the acquisition of the electromagnetic feature amount. In addition, the edge influence correction formula calculated once may be stored in the storage unit 6, and the edge influence correction formula stored in the storage unit 6 may be read by the control unit 3 before the electromagnetic feature amount is corrected. In addition, it is preferable to change the edge influence data and the edge influence correction formula read by the control unit 3 in correspondence with the type of the steel plate 300 that is a measurement target.

A method of correcting the edge influence will be described with reference to FIG. 11. According to the above-described procedure, a curve representing an average variation in the vicinity of the edge can be derived as a correction curve. When the edge distance is set as d, as an expression representing the correction curve illustrated in FIG. 11, a variation amount P of the first electromagnetic feature amount due to the edge influence can be expressed as the following Expression (1).

$$P = f(d) \quad \cdots (1)$$

Here, when a value of the measured first electromagnetic feature amount is set as X1 and the edge distance is set as d1, the change amount P1 of the first electromagnetic feature amount at this position can be expressed as the following Expression (2).

$$P1 = f(d1) \quad \cdots (2)$$

Then, the value X1' of the first electromagnetic feature amount from which the edge influence has been removed can be expressed as the following Expression (3).

$$X1' = X1 - P1 \quad \cdots (3)$$

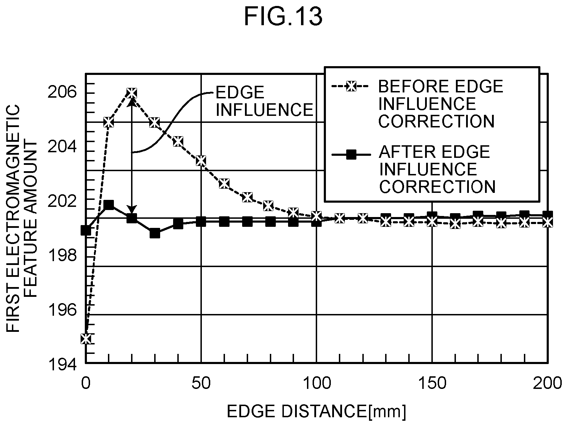

FIG. 13 is a view illustrating a relationship between the first electromagnetic feature amount and the edge distance d before and after the edge influence correction. As illustrated in FIG. 13, before the correction of the edge influence, it can be confirmed that the value of the first electromagnetic feature amount greatly fluctuates due to the edge influence at a position within an edge distance of 100 [mm]. On the other hand, after the edge influence correction, it can be confirmed that the edge influence is removed (the edge influence is reduced) and the value of the first electromagnetic feature amount is substantially uniform at a position within the edge distance 100 [mm]. As a result, by correcting the edge influence, it is possible to accurately derive the electromagnetic feature amount and predict the mechanical characteristics even in the vicinity of the edge. In addition, in a case where a prediction model such as a generalized linear regression using a plurality of electromagnetic feature amounts is used for prediction of the mechanical characteristics, it is possible to accurately predict the mechanical characteristics by correcting the edge influence for all of the electromagnetic feature amounts as inputs of the prediction model.

Here, the above-described edge influence correction method uses the fact that the variation in the electromagnetic feature amount due to the edge influence is constant even when a material, a plate thickness, or the like of the steel plate that is a measurement target is changed. On the other hand, in a case where the material and the edge shape (shape of the plate end portion) are greatly different from those of the steel plate used for the measurement of the edge influence data, the variation in the electromagnetic feature amount due to the edge influence may not be constant.

Therefore, two or more electromagnetic feature amounts of the steel plate 300 that is a measurement target, for example, a first electromagnetic feature amount and a second electromagnetic feature amount are measured. Note that the first electromagnetic feature amount and the second electromagnetic feature amount are different electromagnetic feature amounts, and the first electromagnetic feature amount and the second electromagnetic feature amount, and the edge distance d have a correlation, and the first electromagnetic feature amount and the second electromagnetic feature amount have a correlation via the edge distance d. Then, the variation amount of the first electromagnetic feature amount due to the edge influence is derived by using the edge influence data of each of the first electromagnetic feature amount and the second electromagnetic feature amount. Here, as the second electromagnetic feature amount, it is preferable to use an electromagnetic feature amount in which the variation due to the edge influence is larger and dominant as compared with a variation due to a difference in a material or mechanical characteristics.

The manner of the variation of the electromagnetic feature amount in the vicinity of the edge has a common tendency even in steel plates different in a material and mechanical characteristics, and the edge influence can be corrected by using the edge influence data and the edge distance d. In addition, in a case where the edge distance d is not known, the edge distance can be estimated from the electromagnetic feature amount in which the variation due to the edge influence is larger than the variation due to the material or the mechanical characteristics, and can be used for correction of other electromagnetic feature amounts. In a case where the edge shape is complicated or the edge shape is greatly different depending on the steel plate, the variation in the electromagnetic feature amount in the vicinity of the edge may not be the same. At that time, by directly estimating the variation amount due to the edge influence of the electromagnetic feature amount to be corrected from the electromagnetic feature amount strongly affected by the edge effect, it is possible to derive the electromagnetic feature amount from which the edge influence has been removed.

Although the embodiments to which the invention made by the present inventors is applied have been described above, the present invention is not limited by the description and drawings constituting a part of the disclosure of the present invention according to the present embodiments. For example, the present invention may be applied as a measurement apparatus constituting a manufacturing equipment of a plate-shaped product, and the physical quantity of the plate-shaped product manufactured by the manufacturing apparatus may be measured by the measurement apparatus according to the present invention. In addition, the present invention may be applied as a physical quantity measurement step included in the method of manufacturing a plate-shaped product, and the physical quantity of the plate-shaped product manufactured in the manufacturing step may be measured. According to such a manufacturing equipment of a plate-shaped product and a method of manufacturing a plate-shaped product, a plate-shaped product can be manufactured with good yield.

Furthermore, the present invention may be applied to a measurement method included in a quality management method of a plate-shaped product, and quality management of the plate-shaped product may be performed by measuring a physical quantity of the plate-shaped product by the measurement method according to the present invention. Specifically, the physical quantity of the plate-shaped product is measured in the physical quantity measurement step included in the measurement method according to the present invention, and the quality management of the plate-shaped product can be performed from the measurement result of the physical quantity obtained in the physical quantity measurement step. According to such a quality management method of a plate-shaped product, a high-quality plate-shaped product can be provided. As described above, other embodiments, examples, operation techniques, and the like made by those skilled in the art based on the present embodiment are all included in the scope of the present invention.

Industrial applicability

The present invention can provide a measurement jig, a measurement apparatus, a measurement method, a manufacturing equipment of a plate-shaped product, a quality management method of a plate-shaped product, and a method of manufacturing a plate-shaped product capable of improving measurement accuracy of a physical quantity of a surface in the vicinity of an edge of a measurement target.

Reference Signs List

| 1 | MEASUREMENT APPARATUS |
|---|---|
| 2 | PHYSICAL QUANTITY MEASURING UNIT |
| 3 | CONTROL UNIT |
| 4 | OPERATION UNIT |
| 5 | DISPLAY UNIT |
| 6 | STORAGE UNIT |
| 7 | SENSOR ADHERENCE STATE MONITORING UNIT |
| 7a to 7d | LASER DISTANCE METER |
| 8 | GUIDANCE UNIT |
| 9 | MOVING UNIT |
| 10 | CONNECTING UNIT |
| 11 | EDGE FOLLOWING UNIT |
| 20a to 20d | SENSOR |

| 21 | EXCITATION PORTION |
|---|---|
| 91 | CART |
| 92 | HANDLE |
| 93a to 93d | WHEEL |
| 101 | ARM |
| 102 | CYLINDER |
| 111 | ARM |
| 112 | LIFTING AND LOWERING MEMBER |
| 113 | CONTACT MEMBER |
| 114 | LIFTING AND LOWERING FIXING UNIT |
| 115 | ROTARY SHAFT MEMBER |
| 201 | EXCITATION COIL |
| 202 | MAGNETIZING YOKE |
| 300 | STEEL PLATE |
| 301 | SURFACE |
| 302 | SIDE SURFACE |
| 303 | EDGE |

**Claims**

1. A measurement jig comprising:

   a contact member configured to come into contact with a side surface of a plate-shaped measurement target when a physical quantity measuring unit configured to measure a physical quantity of the measurement target measures a surface in a vicinity of an edge of the measurement target; and
   a holding member configured to hold the contact member such that a distance between the edge and the physical quantity measuring unit in a direction orthogonal to a scanning direction in which the physical quantity measuring unit performs scanning is kept constant.

2. The measurement jig according to claim 1, wherein the contact member is a disk-shaped rotating body having an outer peripheral surface that is in contact with the side surface, and is rotatably provided in the holding member via a rotation shaft of the rotating body.

3. The measurement jig according to claim 1 or 2, wherein the contact member includes a magnet.

4. A measurement apparatus comprising:

   a physical quantity measuring unit configured to measure a physical quantity of a measurement target; and
   the measurement jig according to any one of claims 1 to 3.

5. The measurement apparatus according to claim 4, further comprising:
   a correction unit configured to correct the physical quantity measured by the physical quantity measuring unit by using

a correction formula indicating a relationship between a distance from the edge in the measurement target and the physical quantity, and a distance from the edge to the physical quantity measuring unit in measurement by the physical quantity measuring unit.

6. A measurement method comprising: a physical quantity measurement step of measuring a physical quantity of a measurement target by using the measurement jig according to any one of claims 1 to 3.

7. The measurement method according to claim 6, further comprising:
a correction step of correcting the physical quantity measured in the physical quantity measurement step by using

a correction formula indicating a relationship between a distance from the edge in the measurement target and the physical quantity, and a distance from the edge to the physical quantity measuring unit in the physical quantity measurement step.

8. A manufacturing equipment of a plate-shaped product, comprising:

a manufacturing apparatus configured to manufacture a plate-shaped product; and the measurement apparatus according to claim 4 or 5 which is configured to measure a physical quantity of the plate-shaped product manufactured by the manufacturing apparatus.

9. A quality management method of a plate-shaped product, comprising:

a physical quantity measurement step of measuring a physical quantity of the plate-shaped product by the measurement method according to claim 6 or 7; and a quality management step of performing quality management of the plate-shaped product from a measurement result of the physical quantity obtained in the physical quantity measurement step.

10. A method of manufacturing a plate-shaped product, comprising:

a manufacturing step of manufacturing a plate-shaped product; and a physical quantity measurement step of measuring a physical quantity of the plate-shaped product manufactured in the manufacturing step by the measurement method according to claim 6 or 7.

# FIG.1

(a)

SCANNING
DIRECTION

(b)

SCANNING
DIRECTION

# FIG.2

STEEL PLATE
WIDTH DIRECTION

# FIG.3

MEASUREMENT APPARATUS — 1

| | |
|---|---|
| PHYSICAL QUANTITY MEASURING UNIT — 2 | SENSOR ADHERENCE STATE MONITORING UNIT — 7 |
| CONTROL UNIT — 3 | GUIDANCE UNIT — 8 |
| OPERATION UNIT — 4 | MOVING UNIT — 9 |
| DISPLAY UNIT — 5 | CONNECTING UNIT — 10 |
| STORAGE UNIT — 6 | EDGE FOLLOWING UNIT — 11 |

# FIG.4

(a)

SCANNING
DIRECTION

(b)

SCANNING
DIRECTION

# FIG.5

STEEL PLATE WIDTH DIRECTION

# FIG.6

SCANNING DIRECTION

STEEL PLATE WIDTH DIRECTION

## FIG.7

## FIG.8

# FIG.9

(a)

} REGION IN
VICINITY OF EDGE

(b)

} REGION IN
VICINITY OF EDGE

## FIG.10

```
                    START

                      │
                      ▼                    ⌐S1
            ┌─────────────────────┐
            │   SET MEASUREMENT   │
            │     CONDITION       │
            └─────────────────────┘
                      │
  ⌐S2                 ▼
            ┌─────────────────────┐
            │      MEASURE        │
            │  ELECTROMAGNETIC    │
            │   FEATURE AMOUNT    │
            └─────────────────────┘
                      │
                      ▼                    ⌐S3
            ┌─────────────────────┐
            │ STORE ELECTROMAGNETIC│
            │   FEATURE AMOUNT    │
            └─────────────────────┘
                      │
                      ▼
                  ╱────────╲         ⌐S4
                ╱  IS EDGE   ╲       YES
               ⟨  DISTANCE TO BE ⟩────────────┐
                ╲  CHANGED?  ╱                 │
                  ╲────────╱                   ▼                    ⌐S5
                      │ NO               ┌─────────────────────┐
                      ▼                  │  PERFORM CHANGE OF  │
                  ╱────────╲             │    EDGE DISTANCE    │
                ╱    IS      ╲    ⌐S6     └─────────────────────┘
               ⟨ MEASUREMENT  ⟩   YES              │
                ╲ SAMPLE TO BE ╱────────────┐      │
                ╲  CHANGED?  ╱               │      │
                  ╲────────╱                 ▼      │            ⌐S7
                      │ NO            ┌─────────────────────┐
                      ▼              │  PERFORM CHANGE OF  │
            ┌─────────────────────┐  │ MEASUREMENT SAMPLE  │
            │TERMINATE MEASUREMENT│  └─────────────────────┘
            └─────────────────────┘         ⌐S8
                      │
                      ▼
                     END
```

## FIG.11

## FIG.12

# FIG.13

## INTERNATIONAL SEARCH REPORT

| International application No. |
|---|
| **PCT/JP2023/043287** |

### A. CLASSIFICATION OF SUBJECT MATTER

*G01N 27/9013*(2021.01)i; *B21B 38/00*(2006.01)i
FI:   G01N27/9013; B21B38/00

According to International Patent Classification (IPC) or to both national classification and IPC

### B. FIELDS SEARCHED

Minimum documentation searched (classification system followed by classification symbols)

G01N27/72-G01N27/9093; G01N29/00-G01N29/52; G01N21/84-G01N21/958; G01B7/00-G01B7/34; G01B11/00-G01B11/30; G01B17/00-G01B17/04; B21B38/00-B21B38/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | US 2014/0305216 A1 (THE BOEING CO.) 16 October 2014 (2014-10-16) paragraphs [0030], [0041]-[0048], fig. 2 | 1-2, 4, 6, 9 |
| A | | 3, 5, 7-8, 10 |
| Y | US 2014/0305217 A1 (THE BOEING CO.) 16 October 2014 (2014-10-16) paragraph [0034] | 1-2, 4, 6, 9 |
| A | | 3, 5, 7-8, 10 |
| A | Microfilm of the specification and drawings annexed to the request of Japanese Utility Model Application No. 053802/1982 (Laid-open No. 156264/1983) (MITSUBISHI ELECTRIC CORP.) 19 October 1983 (1983-10-19), entire text | 1-10 |
| A | JP 50-122979 A (NIPPON STEEL CORP.) 26 September 1975 (1975-09-26) entire text | 1-10 |
| A | JP 5-296986 A (KAWASAKI STEEL CORP.) 12 November 1993 (1993-11-12) entire text | 1-10 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 January 2024** | **23 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2023/043287**

| Patent document cited in search report | | | Publication date (day/month/year) | Patent family member(s) | Publication date (day/month/year) |
|---|---|---|---|---|---|
| US | 2014/0305216 | A1 | 16 October 2014 | (Family: none) | |
| US | 2014/0305217 | A1 | 16 October 2014 | (Family: none) | |
| JP | 58-156264 | U1 | 19 October 1983 | (Family: none) | |
| JP | 50-122979 | A | 26 September 1975 | (Family: none) | |
| JP | 5-296986 | A | 12 November 1993 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BERND WOLTER** ; **YASMINE GABI** ; **CHRISTIAN CONRAD**. Nondestructive Testing with 3MA - An Overview of Principles and Application. *Appl. Sci.*, 2019, vol. 9, 1068

- **GERALD SCHNEIBEL** ; **CHRISTOPH KONIG** ; **ASCHWIN GOPALAN** ; **JEAN-MARC DUSSAULX**. Development of an Eddy Current based Inspection Technique for the Detection of Hard Spots on Heavy Plates. *19th World Conference on Non-Destructive Testing*, 2016